# EUROPEAN PATENT APPLICATION

(11) **EP 4 821 769 A1**
(43) Date of publication of application: **14.10.2026**
(21) Application number: 26170765.7
(22) Date of filing: 03.04.2026
(51) Int. Cl.: B60R 16/02, B60L 1/00, B60K 1/04, B60L 3/00

(54) **METHOD OF INSULATION OF ELECTRICAL PROPULSION WIRES IN ELECTRIC VEHICLES**

(30) Priority: 10.04.2025 IT 202500007878
(71) Applicant: FPT Industrial S.p.A., 10156 Torino (IT)
(72) Inventor: ROEWER JUNIOR, Guido, 10156 Torino (IT)
(74) Representative: Fiume, Orazio

(57) **Abstract**

Electric vehicle comprising a vehicle chassis to which at least one electric propulsion motor (M) and a battery pack with a voltage greater than 300 V are associated, and at least one electric power cable (C) arranged to interconnect an inverter (I) of the electric propulsion motor with the battery pack, wherein the electric cable (C) is arranged in a passage (P) defined by the vehicle chassis (F), wherein the passage is painted with an electrically insulating paint.

## Description

### Field of the Invention

The present invention relates to the field of electric vehicles and, in particular, to methods for insulating electric conductors relating to vehicle propulsion.

### State of the art

Electric vehicles and some electrified vehicles are equipped with a high-voltage battery, i.e. voltages higher than 60 V. Very often, the voltages are in the range of 300-800 V. In the event of an accident, deformation of a structural part of the vehicle may result in damage to the insulating sheath of the cables, thereby causing a short circuit of the battery.

Among the risks deriving from damage to the cable sheaths there is also the electrocution of persons who may come into contact with metal parts of the vehicle or be struck by possible electric arcs, as well as the ignition of other parts of the vehicle due to the localized generation of a large amount of heat in the short-circuit area.

The battery itself may also catch fire as a result of a short circuit.

In some cases, even when battery protection systems are provided, the short circuit may be so severe as to trigger an explosion of the battery.

Conversely, in some situations, the anticorrosion paint of a vehicle chassis is removed in order to ensure electrical continuity of the chassis portions themselves, since equipotentiality is a safety requirement. In fact, equipotentiality cannot be guaranteed when the paint provides a certain electrical resistance. Such paints generally have negligible dielectric strength.

Unless specifically excluded in the detailed description that follows, what is described in this section is to be considered an integral part of the detailed description.

### Summary of the invention

The object of the present invention is to provide a method that improves the safety of an electric vehicle, and an electric vehicle obtained thereby.

The basic idea of the present invention is to define a passage seat for the power electric cables from the battery pack to at least one inverter of an electric propulsion motor, wherein the passage seat is previously coated with an insulating paint, preferably elastomeric.

The elastomeric paint is preferable to other paints in that it maintains high resistivity even when subjected to deformation.

In fact, a problem with rigid paints lies in the fact that, in the event of an impact causing deformation of the passage seat of an electric cable, the paint layer tends to form cracks, with an evident loss of insulation. Conversely, an elastomeric paint, although having an overall resistivity lower than that of a thermosetting polyester paint, is more suitable for withstanding significant deformations, preventing one of the power electric cables from accidentally short-circuiting against the vehicle chassis.

According to a preferred variant of the invention,
The dependent claims describe preferred variants of the invention, forming an integral part of the present description.

### Brief Description of the Drawings

Further objects and advantages of the present invention will become clear from the following detailed description of an embodiment thereof (and variants thereof) and from the accompanying drawings, provided purely by way of non-limiting example, in which:
- Figure 1 shows an example of application of the invention to an electric commercial vehicle according to the present invention;
- Figure 2 shows another example applied to a commercial or passenger vehicle.

The same reference numerals and letters in the figures identify the same elements or components or functions.

It should also be noted that the terms "first", "second", "third", "upper", "lower" and the like may be used herein to distinguish various elements. These terms do not imply a spatial, sequential or hierarchical order for the modified elements unless specifically indicated or inferable from the text.

The elements and features illustrated in the different preferred embodiments, including the drawings, may be combined with one another without departing from the scope of protection of the present application as described below.

### Detailed Description of Embodiments

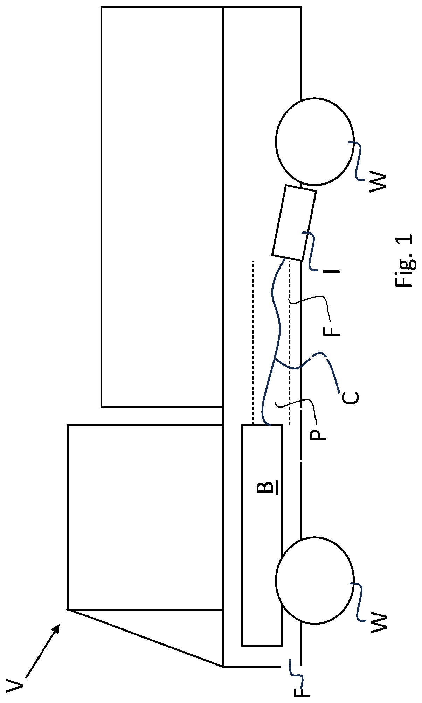

With reference to Figure 1, an electric vehicle V is shown comprising a vehicle chassis F to which at least one electric propulsion motor is associated, preferably integrated in the axle itself, and a battery pack B with a voltage greater than 300 V, and at least one electric power cable C arranged to interconnect the inverter I of the electric propulsion motor with the battery pack B.

The electric cable C is arranged in a passage P defined by the vehicle chassis F, wherein the passage is coated with an electrically insulating paint.

Preferably, the vehicle is a commercial or industrial vehicle comprising a frame with side members, wherein the passage is obtained in a portion of a side member. Preferably, the paint includes an elastomer suitable for being polymerized in situ. It is applied by spraying. Subsequently, the paint polymerizes and forms a layer that coats the passage, so that the sheath of the electric cable does not come into direct contact with a metal part of the chassis.

Preferably, the elastomer is silicone-based.

The passage assumes an approximately tubular shape depending on the shape of the chassis and the components intersecting to define it.

The cross-section of the passage may be open or closed. For example, a profile having a C-shaped cross-section may be used to house the electric power cable. Side members, on the other hand, generally have a closed cross-section of approximately rectangular shape.

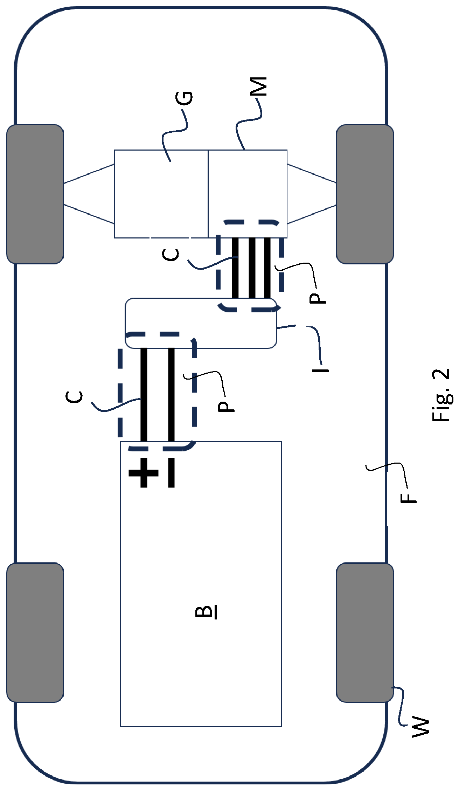

Figure 2 shows another situation in which the vehicle chassis does not comprise side members; therefore, the cables connecting the battery B to the inverter are housed in a passage previously treated according to the same principle described above.

It is noted that the inverter is also connected to the electric motor M. Therefore, preferably, the passage P of the cables connecting the inverter to the electric motor M is also previously coated.

Preferably, when the vehicle chassis does not comprise side members, the cables C are arranged along the vehicle centerline so as to be distant from the sides of the vehicle, reducing the risk of being damaged in a side impact.

In Figure 2 it is noted that the axle integrates the electric motor and a transmission G containing, for example, a gearbox with discrete ratios.

The present invention also relates to a method for treating a passage P of an electric cable C made in a vehicle chassis.

The method comprises a step of painting the passage with an electrically insulating paint before laying the electric cable.

Where necessary, a preliminary step of applying a primer may be provided before applying the electrically insulating paint, in order to ensure optimal adhesion of the paint to the metal parts defining the passage P.

Various embodiments of the non-limiting example described are possible without departing from the scope of protection of the present invention, including all embodiments equivalent for a person skilled in the art to the content of the claims.

From the description above, a person skilled in the art is able to carry out the object of the invention without introducing further constructive details.

## Claims

1. Electric vehicle comprising a vehicle chassis to which at least one electric propulsion motor (M) and a battery pack with a voltage greater than 300 V are associated, and at least one electric power cable (C) arranged to interconnect an inverter (I) of the electric propulsion motor with the battery pack, wherein the electric cable (C) is arranged in a passage (P) defined by the vehicle chassis (F), wherein the passage is painted with an electrically insulating paint.

2. Vehicle according to claim 1, wherein said paint includes an elastomer suitable for being polymerized in situ.

3. Vehicle according to claim 2, wherein said elastomer is silicone.

4. Vehicle according to any of the preceding claims, wherein said passage defines an approximately tubular duct having an open or closed cross-section.

5. Method of treating a passage (P) of an electric cable (C) of a vehicle chassis, wherein the vehicle is equipped with an electric propulsion motor (M) and a battery pack with a voltage greater than 300 V, and wherein said electric cable is arranged to interconnect an inverter (I) of the electric propulsion motor with the battery pack, the method comprising a step of painting the passage (P) with an electrically insulating paint before laying the electric cable.

6. Method according to claim 5, further comprising a preliminary step of applying a primer before applying the electrically insulating paint.

7. Method according to claim 5 or 6, wherein said paint includes an elastomer suitable for being polymerized in situ.

8. Method according to any of claims 5-7, wherein said elastomer is silicone.

9. Method according to any of claims 5-8, wherein when the vehicle comprises side members, said passage is defined by a chassis side member.

10. Method according to any of claims 5-7, wherein when the vehicle does not comprise side members, said passage is obtained along a centerline of the vehicle.
